# FASCICULE DE BREVET EUROPEEN

(11) **EP 3 729 607 B1**
(45) Date de publication et mention de la délivrance du brevet: **24.05.2023**
(21) Numéro de dépôt: 18822062.8
(22) Date de dépôt: 19.12.2018
(51) Int. Cl.: H02K 3/28, H02K 15/06, H02K 3/12

(54) **STATOR POUR MACHINE ÉLECTRIQUE TOURNANTE**
STATOR FÜR EINE ELEKTRISCHE DREHMASCHINE
STATOR FOR ELECTRICAL ROTATING MACHINE

(30) Priorité: 20.12.2017 FR 1762641
(43) Date de publication de la demande: 28.10.2020
(73) Titulaire: VALEO EQUIPEMENTS ELECTRIQUES MOTEUR, 94046 Créteil Cedex (FR)
(72) Inventeur: RAMET, Vincent, 62630 ETAPLES SUR MER (FR); DUQUESNE, Jean, 62630 ETAPLES SUR MER (FR); DE CLERCQ, Stéphane, 62630 ETAPLES SUR MER (FR); PAUWELS, Julien, 62630 ETAPLES SUR MER (FR); MENEZES, Humberto, 62630 ETAPLES SUR MER (FR); DELASSUS, Laurent, 62630 ETAPLES SUR MER (FR)
(74) Mandataire: Valeo Powertrain Systems
(86) Numéro de dépôt international: PCT/EP2018/085905
(87) Numéro de publication internationale: WO 2019/121959

(56) Documents cités:
- EP-A1- 2 698 901
- EP-A2- 1 109 290
- KR-A- 20130 005 576
- US-A1- 2014 033 514
- US-A1- 2017 324 286

## Description

La présente invention concerne une machine électrique tournante telle qu'un alternateur ou un alternodémarreur ou une machine réversible ou un moteur électrique pour véhicule automobile. L'invention porte plus particulièrement sur un stator pour une machine électrique tournante comprenant un bobinage réalisé à partir d'épingles conductrices. L'invention est définie dans la revendication indépendante 1.

Une machine électrique tournante comprend un arbre solidaire d'un rotor et un stator agencé de manière à entourer le rotor. Le rotor et le stator coopèrent par l'intermédiaire d'un champ magnétique. Pour cela, le rotor est, par exemple, muni d'aimants permanents et le stator d'un bobinage électrique. Alternativement, le rotor pourra être un rotor à griffes formé par deux roues polaires qui peut être munie d'aimants permanents ou non. Selon un premier mode de fonctionnement dit mode moteur, le bobinage électrique est alimenté en courant électrique par l'intermédiaire d'un module électronique, de manière à générer un champ magnétique tournant au niveau du bobinage électrique, afin d'entraîner la rotation du rotor. Selon un second mode de fonctionnement dit mode générateur, le rotor est entraîné en rotation par l'intermédiaire du moteur thermique du véhicule, de manière à générer un champ magnétique tournant au niveau du bobinage électrique du stator qui est récupéré en courant électrique par le module électronique.

Le stator comprend une culasse formant une pièce de révolution autour d'un axe passant par le centre du stator. La culasse comporte des dents radiales, s'étendant radialement vers le centre du stator et autour desquelles est réalisé le bobinage électrique. Plus particulièrement, les dents radiales délimitent entre elles des encoches dans lesquelles passent des éléments conducteurs participant à former le bobinage du stator.

Le bobinage du stator peut être réalisé de différentes manières, par exemple à l'aide d'un dispositif à aiguille guidant l'enroulement d'un même fil électrique autour de chaque dent radiale pour former des spires successives. Néanmoins, ce mode de réalisation implique une difficulté de mise en oeuvre pour paramétrer le chemin de l'aiguille guidant le fil électrique à travers les encoches. Notamment, ce mode de réalisation peut ne pas être possible lorsque l'écartement angulaire entre deux dents radiales successives n'est pas suffisant pour permettre le passage de l'aiguille porteuse du fil à enrouler autour des dents.

Pour remédier à cet inconvénient, une autre méthode de bobinage consiste à insérer une pluralité d'épingles conductrices dans les encoches délimitées par les dents radiales, puis à raccorder électriquement leurs extrémités libres deux à deux pour former un chemin électrique continu. Plus précisément, chaque épingle conductrice comprend deux segments conducteurs sensiblement parallèles entre eux et reliés électriquement par une jonction coudée en forme de « U ».

Les segments conducteurs sont insérés au niveau d'une première face d'extrémité axiale du stator, dans deux encoches distinctes. Lorsque les segments conducteurs des épingles conductrices sont insérés dans les encoches, les portions pliées sont saillantes depuis la première face d'extrémité axiale du stator, et les extrémités libres des segments conducteurs émergent depuis une deuxième face d'extrémité axiale du stator. Ainsi, de façon avantageuse, il n'est pas nécessaire de recourir à un dispositif à aiguille comme mentionné ci-dessus. Cette opération est reproduite autant de fois que nécessaire pour remplir chaque encoche d'un même nombre de segments conducteurs et former différentes couches du bobinage. Les segments conducteurs d'une même épingle sont disposés dans une même couche du bobinage, de sorte que les extrémités libres des segments conducteurs sont ensuite connectées entre elles de manière à former des chemins électriques générant des champs magnétiques le long des dents radiales lorsqu'elles sont parcourues par un courant électrique. Autrement dit, les épingles conductrices sont reliées deux à deux pour former différents chemins électriques, chaque chemin électrique pouvant participer à la formation d'une phase d'alimentation de la machine électrique tournante. Par exemple, dans le cas d'un alternodémarreur pour véhicule automobile, des chemins électriques distincts permettent une alimentation en courant triphasé du bobinage. Ce mode de réalisation permet un bobinage du stator comprenant des dents radiales nettement plus rapprochées par rapport à l'alternative précédente. Néanmoins, selon cette méthode de bobinage les portions pliées des épingles conductrices, saillantes depuis la première face d'extrémité axiale du stator, augmentent l'encombrement axial du stator. De plus, il s'avère nécessaire d'utiliser de nombreux connecteurs électriques de raccordement entre les épingles conductrices en vue de former les différents chemins électriques.

Le document EP 2698901 A1 divulgue un stator comprenant un bobinage composé d'épingles conductrices.

L'invention vise à proposer une solution originale d'agencement d'épingles conductrices dans les encoches d'un stator d'une machine électrique tournante et de connexion entre les épingles conductrices, afin, sans que cela ne soit limitatif, de réduire l'encombrement du stator lorsque le bobinage est formé sur celui-ci tout en diminuant le nombre de connecteurs électriques de raccordement nécessaires entre les épingles conductrices.

L'invention propose ainsi un stator pour une machine électrique tournante destinée à équiper un véhicule, le stator comprenant un corps annulaire autour d'un axe et un bobinage, le corps annulaire comportant une pluralité d'encoches régulièrement réparties de façon circonférentielle autour du corps annulaire, et le bobinage comprenant une première série d'épingles conductrices et une deuxième série d'épingles conductrices agencées dans les encoches en plusieurs couches superposées du bobinage selon une direction radiale, à savoir au moins une première couche, une deuxième couche, une troisième couche et une quatrième couche successives les unes aux autres, de sorte que la première couche est radialement à l'extérieur et la quatrième couche est radialement à l'intérieur. Chaque épingle conductrice comprend un premier segment et un deuxième segment qui sont connectés par une jonction coudée de sorte que les segments d'une même épingle conductrice soient disposés dans des encoches distinctes.

Selon l'invention, les premiers segments et les deuxièmes segments de la première série d'épingles sont agencés respectivement dans la première couche du bobinage et dans la deuxième couche du bobinage et les premiers segments et les deuxièmes segments de la deuxième série d'épingles sont agencés respectivement dans la troisième couche du bobinage et dans la quatrième couche du bobinage, la première série d'épingles étant reliée électriquement à la deuxième série d'épingles.

L'invention n'est toutefois pas limitée à un bobinage agencé en quatre couches dans chaque encoche. On pourra prévoir une configuration du bobinage comprenant un nombre pair de couches supérieur à quatre. Une telle configuration est alors réalisée par un agencement de séries d'épingles successivement disposées depuis l'extérieur vers l'intérieur, ceci sans superposition des séries d'épingles formant les couches.

Dans la suite du présent document : les termes « radial/axial » et « intérieur/extérieur » se réfèrent à l'axe du corps annulaire du stator ; et les termes « série d'épingles conductrices / série d'épingles / série », et les termes « épingle conductrice / épingle » sont utilisés indifféremment l'un de l'autre.

On entend par chemin électrique, un chemin électrique continu parcouru par un même courant électrique.

Les épingles conductrices de la première série d'épingles et les épingles conductrices de la deuxième série d'épingles sont avantageusement formées de la même manière. On comprendra que la première série d'épingles est radialement extérieure, alors que la deuxième série d'épingles est radialement intérieure. Les épingles de la première série présentent des dimensions légèrement supérieures à celles de la deuxième série pour compenser leur position extérieure sur un diamètre légèrement supérieur au diamètre sur lequel sont disposées les épingles intérieures.

Les épingles conductrices sont montées chacune dans deux encoches distinctes par engagement de leurs premier et deuxième segments, de sorte que les segments d'une même épingle conductrice occupent deux encoches différentes du corps annulaire. Les segments d'une même épingle conductrice sont situés sur des couches distinctes du bobinage et consécutives l'une à l'autre. Plus particulièrement, les segments d'une épingle de la première série sont situés sur les première et deuxième couches et les segments d'une épingle de la deuxième série sont situés sur les troisième et quatrième couches.

Lorsque les segments des épingles conductrices sont logés dans leur encoche, la jonction coudée de chaque épingle émerge du corps annulaire depuis une première extrémité axiale de celui-ci et les segments de chaque épingle émergent du corps annulaire par des extrémités depuis une deuxième extrémité axiale de celui-ci.

Depuis la première extrémité axiale du corps annulaire, les jonctions coudées de deux épingles conductrices d'une même série d'épingles sont avantageusement adjacentes et parallèles l'une à l'autre. La configuration particulière des jonctions coudées permet ainsi de réduire l'encombrement axial du stator.

Selon une caractéristique de l'invention, la jonction coudée de chaque épingle est formée par une première section linéaire et une deuxième section linéaire reliées électriquement l'une à l'autre par une section vrillée, la première section linéaire étant reliée électriquement au premier segment et la deuxième section linéaire étant reliée électriquement au deuxième segment, et la deuxième section linéaire d'une épingle de la première série d'épingles et la première section linéaire d'une épingle de la deuxième série d'épingles sont adjacentes et en regard l'une à l'autre. Il convient de noter que, dans une même série d'épingles, les sections vrillées des jonctions coudées ne se superposent pas. De plus, on notera que les jonctions coudées de deux séries d'épingles distinctes ne se superposent pas.

Selon une réalisation, chaque jonction coudée peut être formée d'un unique conducteur de manière à ce que une jonction coudée, des deux segments conducteurs et des eux extrémités libres d'une même épingle soient formés à partir d'un seul conducteur électrique s'étendant notamment en forme de U. Alternativement, chaque jonction coudée peut être formée par deux extrémités connectées ensemble. Ainsi, une jonction coudée, deux segments conducteurs et deux extrémités libres d'une même épingle sont formés à partir de deux barres conductrices reliées ensemble.

Selon une caractéristique de l'invention, des extrémités des segments des épingles conductrices d'une première série d'épingles, dite extérieure, sont reliées électriquement pour former un premier chemin électrique le long de la première série d'épingles et des extrémités des segments des épingles conductrices d'une deuxième série d'épingles, dite intérieure, sont reliées électriquement pour former un deuxième chemin électrique le long de la deuxième série d'épingles, le premier chemin électrique et le deuxième chemin électrique étant destinés à former un chemin électrique de la machine électrique tournante.

On comprendra que le premier chemin électrique et le deuxième chemin électrique sont reliés électriquement l'un à l'autre par l'intermédiaire d'organes de raccordement électrique pour former ledit chemin électrique de la machine électrique tournante, aux extrémités desquelles sont disposés des conducteurs permettant le raccordement électrique à une source d'alimentation, via des ponts de diodes ou de transistors notamment, ou à un autre chemin électrique pour former le couplage que ce soit directement à une autre phase ou à un point neutre Il convient de noter que le premier chemin électrique est radialement extérieur, alors que le deuxième chemin électrique est radialement intérieur.

Par ailleurs, on comprendra que la machine électrique tournante comprend plusieurs chemins électriques pour former le bobinage du stator. Par exemple, la machine électrique tournante peut comprendre six chemins électriques formant deux systèmes de trois phases.

Par ailleurs, les chemins électriques peuvent avantageusement permettre une configuration du bobinage en étoile. Toutefois, l'invention n'est pas limitée à cette configuration et on pourra envisager que les chemins électriques permettent une configuration du bobinage en triangle.

Les segments d'une même épingle conductrice sont espacés d'un nombre d'encoches égal à N-1, ce nombre N correspondant au nombre de chemins électriques de la machine électrique tournante.

Selon une caractéristique de l'invention, un premier conducteur et un deuxième conducteur d'un élément de connexion électrique entre deux séries d'épingles conductrices concentriques sont en partie disposés dans des encoches distinctes, le premier conducteur occupant une des couches du bobinage communes à la première série d'épingles et le deuxième conducteur occupant une des couches du bobinage communes à la deuxième série d'épingles, le premier conducteur et le deuxième conducteur étant reliés électriquement l'un à l'autre. Plus particulièrement, le premier conducteur et le deuxième conducteur sont reliés électriquement depuis la première extrémité axiale du corps annulaire du stator, le premier conducteur et le deuxième conducteur occupant deux couches distinctes du bobinage et séparées l'une de l'autre d'au moins une couche.

Il peut notamment être prévu que ces deux conducteurs soient agencés dans des couches séparées d'une unique couche intermédiaire.

Selon une réalisation, le premier conducteur et le deuxième conducteur sont directement connectés l'un à l'autre. On entend par « directement connecté » que le premier conducteur et le deuxième conducteur sont connectés l'un avec l'autre sans élément intermédiaire.

Selon une réalisation, la première série d'épingles est reliée électriquement en série à la deuxième série d'épingles. Cela permet d'améliorer le couple produit pas la machine.

Selon une première variante de réalisation, le premier conducteur occupe la première couche du bobinage et le deuxième conducteur occupe la troisième couche du bobinage.

Selon une deuxième variante de réalisation, le premier conducteur occupe la deuxième couche du bobinage et le deuxième conducteur occupe la quatrième couche du bobinage.

Il peut par ailleurs être prévu que plus d'une couche intermédiaire, ici deux, soient présentes entre les couches dans lesquelles sont agencées les conducteurs. Selon une troisième variante de réalisation, le premier conducteur occupe la première couche du bobinage et le deuxième conducteur occupe la quatrième couche du bobinage.

Selon une caractéristique de l'invention, le premier conducteur et le deuxième conducteur comportent chacun une portion linéaire et une portion courbée, les portions linéaires étant logées dans leur encoche respective et les portions courbées étant reliées électriquement l'une à l'autre.

Par ailleurs, le premier conducteur et le deuxième conducteur comportent chacun une portion de liaison électrique, la portion linéaire des premier et deuxième conducteurs est avantageusement délimitée par la portion courbée émergeant du corps annulaire depuis la première extrémité axiale de celui-ci et par la portion de liaison électrique émergeant du corps annulaire depuis la deuxième extrémité axiale de celui-ci.

Depuis la deuxième extrémité axiale du corps annulaire, les premier et deuxième chemins électriques comportent chacun une première extrémité et une deuxième extrémité. On comprendra que les extrémités des premier et deuxième chemins sont formées respectivement par une extrémité d'un segment d'une épingle conductrice, non reliée électriquement à une extrémité de segment d'une épingle de la même série.

La première extrémité du premier chemin électrique est reliée électriquement à la portion de liaison électrique du premier conducteur et la première extrémité du deuxième chemin électrique est reliée électriquement à la portion de liaison électrique du deuxième conducteur.

On comprendra alors que le premier conducteur et le deuxième conducteur permettent de relier électriquement le premier chemin électrique et le deuxième chemin électrique l'un à l'autre, ceci pour former le chemin électrique de la machine électrique tournante. En d'autres termes, le premier chemin électrique radialement extérieur est relié électriquement au deuxième chemin électrique radialement intérieur par l'intermédiaire d'un élément de connexion électrique formé d'un premier conducteur et d'un deuxième conducteur associés, pour former ledit chemin électrique parcouru par un même courant électrique.

Selon une caractéristique de l'invention, un premier organe de raccordement électrique et un deuxième organe de raccordement électrique sont en partie disposés dans des encoches distinctes, le premier organe de raccordement électrique occupant la même couche du bobinage que le premier conducteur de l'élément de connexion électrique pour former une première extrémité terminale dudit chemin électrique et le deuxième organe de raccordement électrique occupant la même couche du bobinage que le deuxième conducteur de l'élément de connexion électrique pour former une deuxième extrémité terminale dudit chemin électrique.

Le premier organe de raccordement électrique et le deuxième organe de raccordement électrique comportent chacun une portion linéaire délimitée par une première portion émergeant du corps annulaire depuis la première extrémité axiale du corps annulaire et une deuxième portion émergeant du corps annulaire depuis la deuxième extrémité axiale du corps annulaire.

La première portion du premier organe de raccordement électrique est destinée à former la première extrémité terminale du chemin électrique de la machine électrique tournante et la deuxième portion du premier organe de raccordement électrique est reliée à la deuxième extrémité du premier chemin électrique. De façon similaire, la première portion du deuxième organe de raccordement électrique est destinée à former la deuxième extrémité terminale du chemin électrique de la machine électrique tournante et la deuxième portion du deuxième organe de raccordement électrique est reliée à la deuxième extrémité du deuxième chemin électrique.

Selon une caractéristique de l'invention, les premier et deuxième conducteurs d'un élément de connexion électrique et les premier et deuxième organes de raccordement électrique sont séparés d'un même nombre d'encoches.

Selon une caractéristique de l'invention, pour relier électriquement le premier conducteur et le deuxième conducteur d'un élément de connexion électrique, la portion courbée d'au moins l'un de ces conducteurs chevauche au moins une partie d'une épingle d'une des séries d'épingles.

Selon une caractéristique de l'invention, au moins une barrette de liaison électrique est agencée entre deux encoches, la barrette présentant deux portions conductrices occupant une même couche du bobinage dans chacune de ces deux encoches et une partie de raccordement reliant ces deux portions conductrices, et la couche du bobinage occupée par les deux portions conductrices étant distincte des couches occupées par les premier et deuxième conducteurs.

Selon une particularité, au moins une portion conductrice de la barrette est agencée dans l'encoche recevant le premier conducteur.

Avantageusement, deux barrettes de liaison électrique sont agencées chacune entre deux encoches, chaque barrette présentant deux portions conductrices occupant une même couche du bobinage dans chacune de ces deux encoches et une partie de raccordement reliant ces deux portions conductrices, la couche du bobinage occupée par les deux portions conductrices étant distincte des couches occupées par le premier et deuxième conducteurs et les couches occupées par les portions conductrices de chaque barrette étant distinctes l'une de l'autre.

Ces barrettes de liaison électrique permettent avantageusement d'assurer que, dans une même encoche, les segments des épingles conductrices et/ou les portions linéaires des conducteurs et des organes de raccordement électrique soient parcourus respectivement par un courant électrique de sorte que les courants soient orientés dans un même sens de circulation. Il a été constaté qu'un tel agencement permet d'homogénéiser le champ magnétique du stator.

Dans une même encoche, le courant électrique traversé par les segments des épingles conductrices et/ou les portions linéaires des conducteurs et des organes de raccordement est le courant électrique traversant le même chemin électrique.

Selon une caractéristique de l'invention, la partie de raccordement de la barrette chevauche au moins une partie d'une épingle d'une des séries d'épingles. Plus particulièrement, la partie de raccordement de la barrette chevauche au moins une section vrillée d'une jonction coudée d'une épingle.

Selon une caractéristique de l'invention, la portion courbée d'au moins un des premier ou deuxième conducteurs chevauche la partie de raccordement de la barrette.

L'invention a également pour objet une machine électrique tournante comprenant un stator selon l'une quelconque des caractéristiques de l'invention du présent document. La machine électrique tournante peut former un alternateur ou un alternodémarreur ou une machine réversible ou encore un moteur électrique.

Avantageusement, la machine comporte deux séries de trois chemins électriques dédiés aussi bien à un fonctionnement en mode alternateur qu'à un fonctionnement en mode moteur.

D'autres caractéristiques, détails et avantages de l'invention ressortiront plus clairement à la lecture de la description donnée ci-après à titre indicatif en relation avec des dessins dans lesquels :
- la figure 1 illustre une vue schématique d'une machine électrique tournante,
- la figure 2 illustre une vue en coupe d'un stator représenté par un corps annulaire comportant une pluralité d'encoches destinées à être équipées d'épingles conductrices selon l'invention pour former plusieurs couches d'un bobinage,
- la figure 3 illustre une vue en perspective d'un stator équipé d'un bobinage selon un premier mode de réalisation de l'invention,
- la figure 4 illustre une vue en perspective d'une épingle conductrice,
- la figure 5 illustre un détail du stator équipé d'un bobinage selon le premier mode de réalisation de la figure 3, où on a représenté plus en détail des conducteurs et des organes de raccordement électrique permettant la formation d'un chemin électrique selon ce premier mode de réalisation,
- la figure 6 illustre schématiquement un chemin électrique formé dans le stator équipé d'un bobinage selon le premier mode de réalisation,
- la figure 7 illustre une vue en perspective d'un stator équipé d'un bobinage selon un deuxième mode de réalisation de l'invention,
- la figure 8 illustre schématiquement un chemin électrique formé dans le stator équipé d'un bobinage selon le deuxième mode de réalisation,
- la figure 9 illustre une vue en perspective d'un stator équipé d'un bobinage selon un troisième mode de réalisation de l'invention,
- la figure 10 illustre schématiquement un chemin électrique formé dans le stator équipé d'un bobinage selon le troisième mode de réalisation,
- la figure 11 illustre un détail du stator équipé du bobinage selon le deuxième mode de réalisation illustré aux figures 7 et 8, où on a représenté plus en détail des conducteurs et des organes de raccordement électrique permettant la formation d'un chemin électrique selon ce deuxième mode de réalisation,
- la figure 12 illustre un détail du stator équipé du bobinage selon le troisième mode de réalisation illustré aux figures 9 et 10, où on a représenté plus en détail des conducteurs et des organes de raccordement électrique permettant la formation d'un chemin électrique selon ce troisième mode de réalisation.

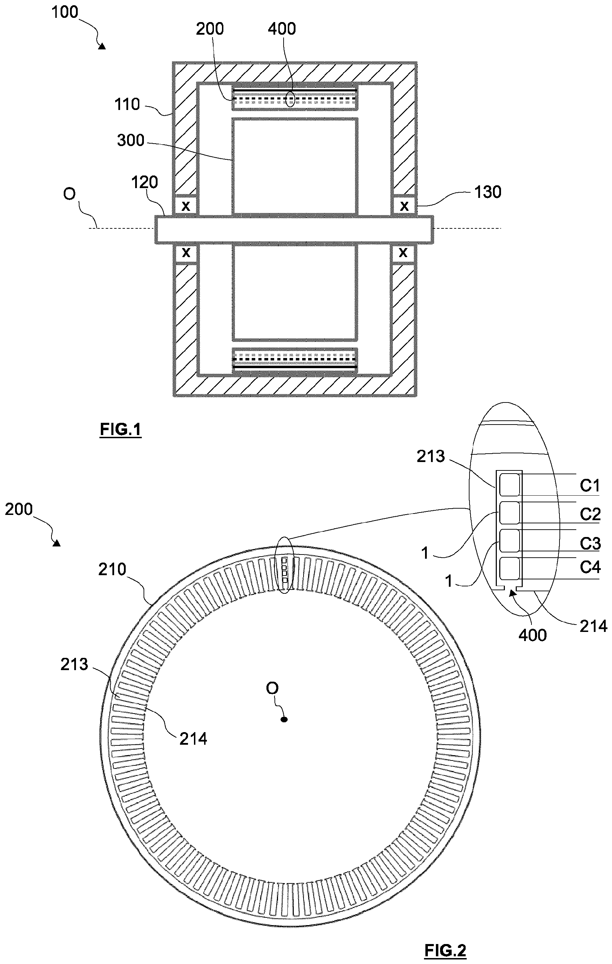

Tel qu'illustré à la figure 1, une machine électrique tournante 100 comporte une enveloppe 110 logeant un stator 200 et un rotor 300 radialement disposé à l'intérieur du stator 200. Le stator 200 est équipé d'un bobinage 400. Par exemple le rotor 300 est équipé d'aimants permanents, de préférence logés dans des encoches d'un corps de rotor formé d'un empilement de tôles, formant des pôles magnétiques. Alternativement, le rotor peut être formé par deux roues polaires équipées ou non d'aimants permanents, les griffes des roues polaires formant également des pôles magnétiques. Un arbre d'entraînement 120 solidaire du rotor 300 permet de transmettre le couple de la machine électrique tournante 100. L'arbre d'entraînement 120 est porté par l'enveloppe 110 de la machine électrique tournante 100 via des roulements 130. Dans un mode moteur, lorsque la machine électrique tournante 100 est alimentée en courant, le pilotage de cette alimentation permet la création d'un champ magnétique tournant par l'intermédiaire du bobinage 400 du stator 200, ce qui, par l'intermédiaire des aimants associés au rotor 300, entraîne alors le rotor 300 en rotation autour d'un axe O commun au stator 200 et au rotor 300. L'arbre d'entraînement 120 est alors entraîné en rotation autour de l'axe O et la machine électrique tournante 100 peut transmettre le couple requis au moteur thermique. Dans un mode alternateur, la rotation de l'arbre d'entraînement et du rotor 300 génère la création d'un champ magnétique et par suite l'apparition d'un courant dans le bobinage, amené à être redressé par un pont de diodes ou de transistors approprié pour alimenter les consommateurs électriques du véhicule et pour recharger la batterie.

Un ensemble électronique peut notamment être monté d'un côté de la machine à l'intérieur ou à l'extérieur de l'enveloppe 110. Cet ensemble comporte par exemple un module de puissance permettant de redresser le courant électrique du stator et un module de commande permettant de piloter la machine. Alternativement, l'ensemble électronique peut être séparé de la machine électrique tournante et monté sur le véhicule de manière séparé.

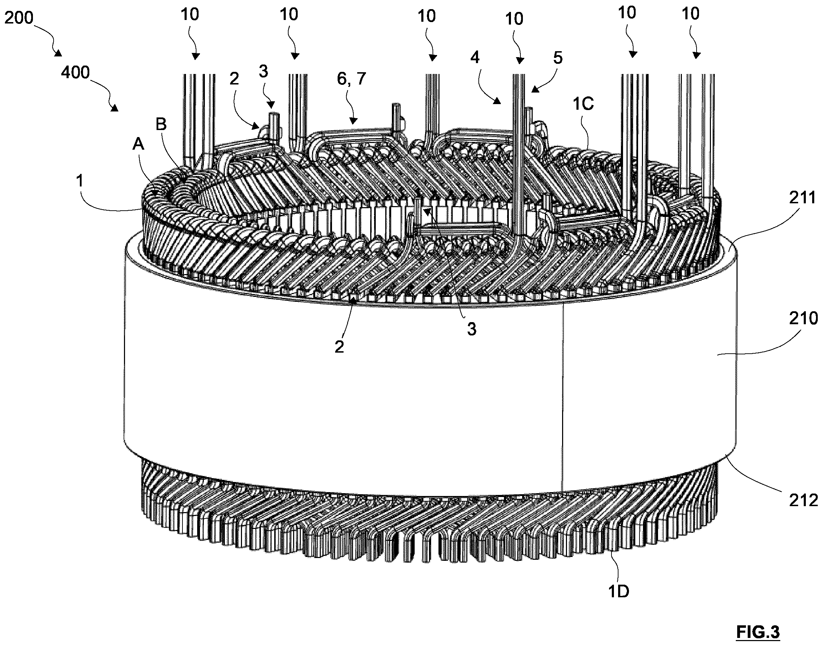

En référence à la figure 2, on a représenté une vue en coupe d'un tel stator 200 comprenant une pluralité d'encoches 213 destinées à être équipées d'épingles conductrices 1 formant bobinage 400. On a représenté en détail un agrandissement d'une encoche 213 comprenant des éléments de ce bobinage 400. On comprendra que l'agencement ainsi illustré est le même pour chacune des encoches 213. Le stator 200 comprend un corps annulaire 210 autour de l'axe O. Le corps annulaire 210 du stator 200 est axialement délimité par une première extrémité axiale 211 et par une deuxième extrémité axiale 212 opposées l'une à l'autre, telles qu'illustrées à la figure 3. Le corps annulaire 210 comporte une pluralité d'encoches 213 régulièrement réparties de façon circonférentielle autour du corps annulaire 210. Les encoches 213 sont délimitées par des dents 214 s'étendant radialement à l'intérieur du corps annulaire 210. Les encoches 213 sont remplies d'épingles conductrices 1 de sorte à former plusieurs couches C1-C4 du bobinage 400 de la machine électrique tournante 100. Plus particulièrement, les épingles conductrices 1 remplissent les encoches 213 du corps annulaire 210 pour former quatre couches C1-C4 successives du bobinage 400, ci-après dénommées première couche C1, deuxième couche C2, troisième couche C3 et quatrième couche C4. Les couches C1-C4 du bobinage 400 sont superposées les unes aux autres dans les encoches 213 du corps annulaire 210 de sorte que la première couche C1 du bobinage 400 est située radialement à l'extérieur par rapport à l'axe O et la quatrième couche C4 du bobinage 400 est située radialement à l'intérieur par rapport à l'axe O. On comprendra que la première couche C1 et la deuxième couche C2 sont des couches radialement extérieures et que le troisième couche C3 et la quatrième couche C4 sont des couches radialement intérieures. La deuxième couche C2 est radialement extérieure par rapport à la troisième couche C3.

Les quatre couches C1-C4 ainsi formées sont données à titre d'exemple non limitatif. Ainsi, on pourra prévoir une configuration du bobinage 400 comprenant un nombre pair de couches supérieur à quatre.

Une telle configuration est alors réalisée par un agencement de séries d'épingles successivement disposées depuis l'extérieur vers l'intérieur, ceci sans superposition de deux séries d'épingles concentriques et directement successives.

Dans les modes de réalisation décrits ci-après, la machine est une machine électrique double triphasé comprenant deux systèmes de trois phases chacun. Par exemple, le nombre de pôles magnétiques au rotor 300 est défini à 16 et le nombre d'encoches est égal à 96. Alternativement, le nombre de pole du rotor peut par exemple être de 8, 10, 12 ou 14. Alternativement, le nombre d'encoches peut par exemple être de 48, 60, 72, 84. Le courant circulant dans le premier système de phase est avantageusement décalé d'environs 30° électriques par rapport au courant circulant dans l'autre système de phase.

On va maintenant décrire en détail l'agencement des épingles 1 participant à la formation du bobinage 400 en se référant tout d'abord à un premier mode de réalisation illustré aux figures 3, 5 et 6, dans lesquelles on a représenté plus en détail le stator 200 équipé du bobinage 400 selon ce premier mode de réalisation. Le bobinage 400 comprend plus particulièrement plusieurs premières séries A d'épingles conductrices 1 agencées dans les première et deuxième couches C1, C2 du bobinage 400 et plusieurs deuxièmes séries B d'épingles conductrices 1 agencées dans les troisième et quatrième couches C3, C4 du bobinage 400. Les premières séries A d'épingles conductrices 1 et les deuxièmes séries B d'épingles conductrices 1 sont destinées à former plusieurs chemins électriques 10 du bobinage 400 de la machine électrique tournante 100. En l'occurrence, selon ce mode de réalisation, le bobinage 400 comporte six chemins électriques 10 formant les phases de la machine électrique tournante 100. Les chemins électriques 10 du bobinage 400 sont destinés à être raccordés en deux groupes indépendant pour recevoir chacun une alimentation électrique triphasée, un tel raccordement étant avantageusement réalisé selon une configuration du bobinage 400 en étoile, sans toutefois que cela ne soit limitatif.

On notera que les premières séries A d'épingles conductrices permettent la formation d'un premier ensemble d'épingles 1 concentrique extérieur, alors que les deuxièmes séries B d'épingles conductrices permettent la formation d'un deuxième ensemble d'épingles 1 concentrique intérieur.

Dans la suite de la description de ce premier mode de réalisation et afin de simplifier la compréhension de l'invention, on ne décrira que l'un de ces chemins électriques 10.

Un tel chemin électrique 10 est en partie formé par une première série A d'épingles conductrices 1 et une deuxième série B d'épingles conductrices 1 agencées dans les encoches 213 en plusieurs couches C1-C4 superposées du bobinage 400 selon une direction radiale.

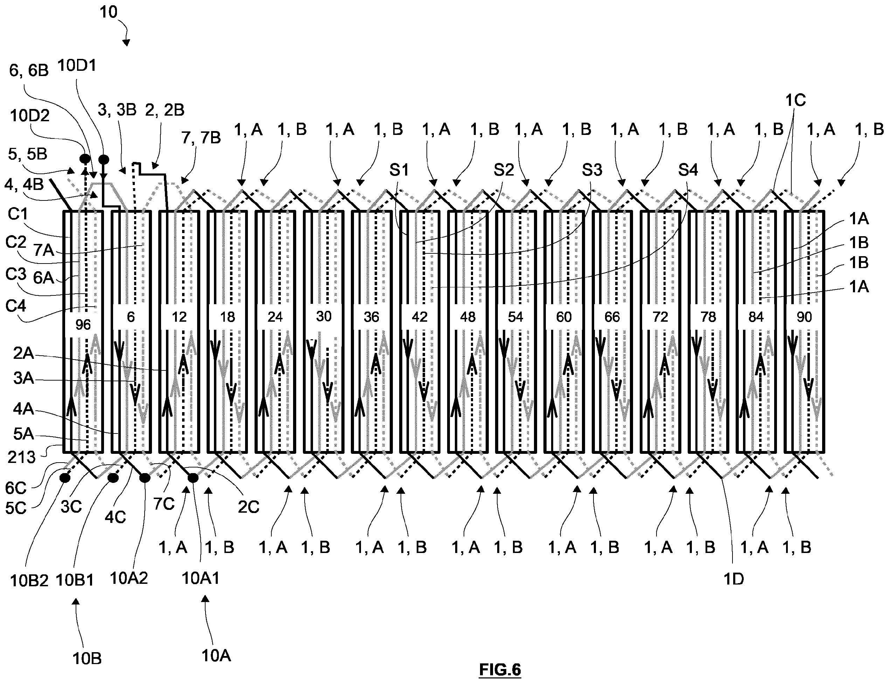

A la figure 6, on a représenté schématiquement un tel chemin électrique 10 du bobinage 400 formé par remplissage d'un nombre d'encoches 213 prédéterminé égal à 96 dans cet exemple. Plus particulièrement, les encoches 213 dédiées audit chemin électrique 10 sont les encoches 213 numérotées 6, 12, 18, 24, 30, 36, 42, 48, 54, 60, 66, 72, 78, 84, 90 et 96. On comprendra qu'on a représenté uniquement les encoches 213 du corps annulaire 210 associées audit chemin électrique 10 et que deux encoches 213 successives dédiées audit chemin électrique 10 sont espacées l'une de l'autre d'un nombre d'encoches 213 égal à 5. On comprendra également que cet espacement des encoches 213 est destiné à former les cinq autres chemins électriques 10 du bobinage 400 du stator 200. Dans la suite de la description relative à ce premier mode de réalisation, on pourra à tout moment se référer à la figure 6 pour faciliter la compréhension de l'invention.

Dans une même encoche 213, on a représenté, de la gauche vers la droite, les couches C1-C4 du bobinage 400 de la figure 2 successives les unes aux autres, étant entendu que selon l'invention ces couches C1-C4 sont empilées radialement. Ainsi, on a représenté, successivement, la première couche C1 du bobinage 400, la deuxième couche C2 du bobinage 400, la troisième couche C3 du bobinage 400 et la quatrième couche C4 du bobinage 400. La première couche C1 du bobinage 400 est représentée en traits pleins foncés, la deuxième couche C2 du bobinage 400 est représentée en traits pleins clairs, la troisième couche C3 du bobinage 400 est représentée en traits pointillés foncés et la quatrième couche C4 du bobinage 400 est représentée en traits pointillés clairs.

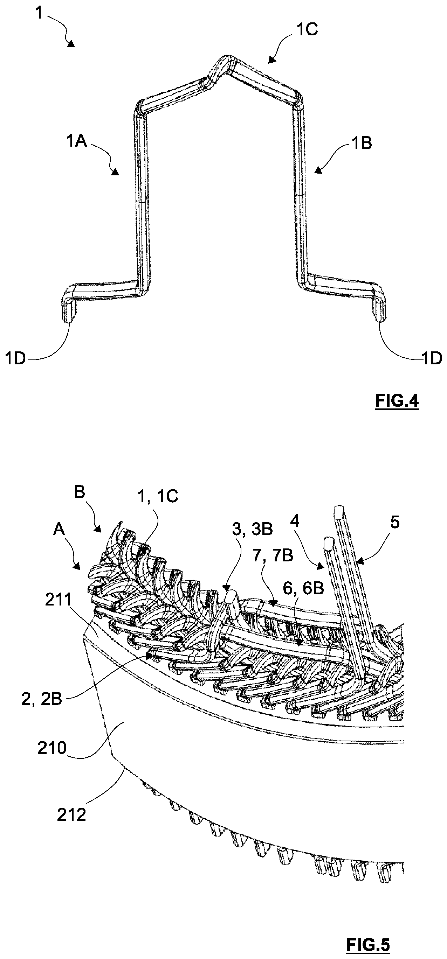

En référence à la figure 4, chaque épingle conductrice 1 comprend un premier segment 1A et un deuxième segment 1B connectés par une jonction coudée 1C. On comprendra que les segments 1A, 1B et la jonction coudée 1C d'une même épingle conductrice 1 forment ensemble un élément continu conducteur de courant. Les segments 1A, 1B d'une même épingle conductrice 1 sont disposés dans des encoches 213 distinctes et dans des couches C1-C4 distinctes, tel que cela sera décrit ultérieurement.

Les segments 1A, 1B des épingles conductrices 1 sont insérés dans les encoches 213 correspondantes depuis la première extrémité axiale 211 du corps annulaire 210, de sorte que la jonction coudée 1C de chaque épingle émerge du corps annulaire 210 depuis la première extrémité axiale 211 de celui-ci, et de sorte que les segments 1A, 1B de chaque épingle émergent du corps annulaire 210 par des extrémités 1D depuis une deuxième extrémité axiale 212 de celui-ci. Lorsque les épingles conductrices 1 sont logées dans les encoches 213 correspondantes, les portions des segments 1A, 1B d'une même épingle 1 émergeant par des extrémités 1D depuis la deuxième extrémité axiale 212 du corps annulaire 210 sont pliées dans des directions opposées l'une à l'autre de façon à maintenir les épingles conductrices 1 dans les encoches 213. Ceci permet également d'orienter les portions des segments 1A, 1B des séries A, B d'épingles conductrices 1 disposées dans la première et deuxième couche C1, C2 du bobinage 400 selon une première orientation et d'orienter les portions des segments 1A, 1B des séries A, B d'épingles conductrices 1 disposées dans la troisième et quatrième couche C3, C4 du bobinage 400 selon une deuxième orientation.

Par exemple, les jonctions coudées 1C des épingles de l'une des séries A, B sont orientées selon un sens anti-horaire et les jonctions coudées 1C des épingles de l'autre série A, B sont orientées selon un sens horaire. On entend par les termes « sens horaire » et « sens anti-horaire », des sens opposés l'un à l'autre et étant chacun orienté autour de l'axe de stator. Selon une alternative, les jonctions coudées 1C des épingles des séries A, B sont orientées selon un même sens qui peut être le sens horaire ou le sens anti-horaire.

Les segments 1A, 1B d'une même épingle conductrice 1 sont espacés d'un nombre d'encoches 213 égal à N-1, N correspondant au nombre de chemins électriques 10 de la machine électrique tournante 100. Tel que défini précédemment, ce nombre N est ici égal à 6.

Depuis la première extrémité axiale 211 du corps annulaire 210, il convient de noter que les jonctions coudées 1C de deux épingles conductrices 1 consécutives d'une même série A, B d'épingles 1 sont sensiblement parallèles l'une à l'autre, ceci sans recouvrement l'une par rapport à l'autre. La configuration particulière des jonctions coudées 1C permet ainsi de réduire l'encombrement axial du stator 200.

Par ailleurs, les jonctions coudées 1C des épingles 1 de la première série A d'épingles 1 sont configurées pour que les premiers segments 1A de la première série A d'épingles 1 soient agencés dans la première couche C1 du bobinage 400 et pour que les deuxièmes segments 1B de la première série A d'épingles 1 soient agencés dans la deuxième couche C2 du bobinage 400. De façon similaire, les jonctions coudées 1C des épingles 1 de la deuxième série B d'épingles 1 sont configurées pour que les premiers segments 1A de la deuxième série B d'épingles 1 soient agencés dans la troisième couche C3 du bobinage 400 et pour que les deuxièmes segments 1B de la deuxième série B d'épingles 1 soient agencés dans la quatrième couche C4 du bobinage 400. On comprendra alors que les segments 1A, 1B d'une même épingle 1 sont situés sur des couches C1-C4 distinctes et consécutives l'une à l'autre. On comprendra qu'on forme ainsi deux ensembles d'épingles distincts et concentriques, à savoir un premier ensemble radialement extérieur formé par la première série A d'épingle 1 et un deuxième ensemble radialement intérieur formé par la deuxième série B d'épingle 1.

La première série A d'épingles 1 est reliée électriquement à la deuxième série B d'épingles 1 pour former ledit chemin électrique 10. Plus particulièrement, pour former ledit chemin électrique 10, des extrémités 1D des segments 1A, 1B des épingles conductrices 1 de la première série A sont reliées électriquement pour former un premier chemin électrique 10A et des extrémités 1D des segments 1A, 1B des épingles conductrices 1 de la deuxième série B sont reliées électriquement pour former un deuxième chemin électrique 10B, le premier chemin électrique 10A et le deuxième chemin électrique 10B étant destinés à être reliés électriquement par un élément de connexion électrique 2, 3 pour former ledit chemin électrique 10 de la machine électrique tournante 100. Les extrémités 1D des segments 1A, 1B des épingles conductrices 1 de la première série A disposées dans le première couche C1 et dans la deuxième couche C2 sont reliées électriquement en série. Il en est de même pour les extrémités 1D des segments 1A, 1B des épingles conductrices 1 de la deuxième série B disposées dans le troisième couche C3 et dans la quatrième couche C4.

Depuis la deuxième extrémité axiale 212 du corps annulaire 210, les premier et deuxième chemins électriques 10A, 10B comportent chacun une première extrémité 10A1, 10B1 et une deuxième extrémité 10A2, 10B2. On comprendra que les extrémités 10A1, 10B1, 10A2, 10B2 des premier et deuxième chemins 10A, 10B sont formées respectivement par une extrémité 1D de segment d'épingle conductrice 1, non reliée électriquement à une extrémité 1D de segment 1A, 1B d'une épingle 1 de la même série A, B.

Un élément de connexion électrique 2, 3 comporte notamment un premier conducteur 2 et un deuxième conducteur 3 qui permettent de relier électriquement le premier chemin électrique 10A et le deuxième chemin électrique 10B l'un à l'autre.

Les premier et deuxième conducteurs 2, 3 comportent chacun une portion linéaire 2A, 3A délimitée par une portion courbée 2B, 3B émergeant du corps annulaire 210 depuis la première extrémité axiale 211 de celui-ci et par une portion de liaison électrique 2C, 3C émergeant du corps annulaire 210 depuis la deuxième extrémité axiale 212 de celui-ci. On comprendra que la portion linéaire 2A, 3A, la portion courbée 2B, 3B et la portion de liaison électrique 2C, 3C d'un premier ou deuxième conducteur 2, 3 forment ensemble un élément continu conducteur de courant.

En pratique, le premier conducteur 2 et le deuxième conducteur 3 sont insérés, par leurs portions linéaires 2A, 3A, dans leur encoche 213 respective, ceci depuis la première extrémité axiale 211 du corps annulaire 210 du stator 200. La partie de la portion linéaire 2A, 3A des premier et deuxième conducteurs 2, 3 émergeant du corps annulaire 210 du stator 200 depuis la deuxième extrémité axiale 212 est alors pliée pour former la portion de liaison électrique 2C, 3C.

Les premier et deuxième conducteurs 2, 3 sont disposés dans des encoches 213 distinctes. De façon identique aux segments 1A, 1B d'une même épingle, les premier et deuxième conducteurs 2, 3 connectés ensemble sont espacés d'un nombre d'encoches 213 égal à N-1, tel que défini précédemment.

Le premier conducteur 2 et le deuxième conducteur 3 occupent deux couches C1, C3 du bobinage 400 distinctes et séparées l'une de l'autre d'au moins une couche du bobinage 400. Plus particulièrement, la portion linéaire 2A du premier conducteur 2 occupe une des couches C1, C2 communes à la première série A d'épingles 1 et la portion linéaire 3A du deuxième conducteur 3 occupe une des couches C3, C4 du bobinage 400 communes à la deuxième série B d'épingles 1. Le premier conducteur 2 et le deuxième conducteur 3 sont reliés électriquement depuis la première extrémité axiale 211 du corps annulaire 210 du stator 200. De façon plus détaillée, la portion linéaire 2A du premier conducteur 2 occupe la première couche C1 du bobinage 400 et la portion linéaire 3A du deuxième conducteur 3 occupe la troisième couche C3 du bobinage 400 et sont séparées l'une de l'autre par la deuxième couche C2.

On comprendra que la portion de liaison électrique 2C, 3C des premier et deuxième conducteurs 2, 3 présente une orientation identique à celle d'une portion pliée d'un segment d'une épingle disposée dans la même couche C1, C3 du bobinage 400 que le conducteur 2, 3 correspondant.

Les premier et deuxième conducteurs 2, 3 sont reliés électriquement l'un à l'autre par leur portion courbée 2B, 3B, depuis la première extrémité axiale 211 du corps annulaire 210 du stator 200.

En se référant à la figure 5, pour relier électriquement le premier conducteur 2 et le deuxième conducteur 3 selon ce premier mode de réalisation, la portion courbée 2B, 3B d'au moins un des premier ou deuxième conducteurs 2, 3 chevauche au moins une partie d'une épingle d'une des séries A, B d'épingles. Plus particulièrement, la portion courbée 2B du premier conducteur 2 chevauche une partie d'une épingle de la première série A. On notera que la portion courbée 2B du premier conducteur 2 s'étend radialement vers l'intérieur jusqu'à être au contact de la portion courbée 3B du deuxième conducteur 3. Alternativement, la portion courbée 3B du deuxième conducteur 3 peut s'étendre radialement vers l'extérieur jusqu'à être au contact de la portion courbée 2B du premier conducteur 2.

De manière alternative, les portions courbées 2B, 3B peuvent être reliée entre elles au moyen d'un dispositif d'interconnection.

Depuis la deuxième extrémité axiale 212 du corps annulaire 210, pour relier électriquement le premier chemin électrique 10A et le deuxième chemin électrique 10B, la première extrémité 10A1 du premier chemin électrique 10A est reliée électriquement à la portion de liaison électrique 2C du premier conducteur 2 et la première extrémité 10B1 du deuxième chemin électrique 10B est reliée électriquement à la portion de liaison électrique 3C du deuxième conducteur 3.

On comprendra alors que le premier conducteur 2 et le deuxième conducteur 3 permettent de relier électriquement la première couche C1 du bobinage 400 et la troisième couche C3 du bobinage 400 l'une à l'autre.

Un premier organe de raccordement électrique 4 et un deuxième organe de raccordement électrique 5 permettent de former les extrémités terminales 10D1, 10D2 dudit chemin électrique 10, afin d'être raccordés au réseau électrique du véhicule via des ponts de diodes ou de transistors ménagés sur une carte de commande électronique.

Les premier et deuxième organes de raccordement électrique 4, 5 comportent chacun une portion linéaire 4A, 5A délimitée par une première portion 4B, 5B émergeant du corps annulaire 210 depuis la première extrémité axiale 211 de celui-ci etpar une deuxième portion 4C, 5C émergeant du corps annulaire 210 depuis la deuxième extrémité axiale 212 de celui-ci. On comprendra que la portion linéaire 4A, 5A, la première et deuxième portions 4B, 4C, 5B, 5C d'un premier ou deuxième organe de raccordement électrique 4, 5 forment ensemble un élément continu conducteur de courant.

En pratique, le premier organe de raccordement électrique 4 et le deuxième organe de raccordement électrique 5 sont insérés, par leurs portions linéaires 4A, 5A, dans leur encoche 213 respective, ceci depuis la première extrémité axiale 211 du corps annulaire 210 du stator 200. La partie de la portion linéaire 4A, 5A des premier et deuxième organes de raccordement électrique 4, 5 émergeant du corps annulaire 210 du stator 200 depuis la deuxième extrémité axiale 212 est alors pliée pour former la deuxième portion 4C, 5C.

Les premier et deuxième organes de raccordement électrique 4, 5 sont disposés dans des encoches 213 distinctes. De façon identique aux segments 1A, 1B d'une même épingle 1, les premier et deuxième organes de raccordement électrique 4, 5 reliés ensemble sont espacés d'un nombre d'encoches 213 égal à N-1, tel que défini précédemment.

La portion linéaire 4A du premier organe de raccordement électrique 4 occupe la même couche du bobinage 400 que la portion linéaire 2A du premier conducteur 2, à savoir la première couche C1 du bobinage 400, ceci pour former une première extrémité terminale 10D1 dudit chemin électrique 10. La portion linéaire 5A du deuxième organe de raccordement électrique 5 occupe la même couche du bobinage 400 que la portion linéaire 3A du deuxième conducteur 3, à savoir la troisième couche C3 du bobinage 400, ceci pour former une deuxième extrémité terminale 10D2 dudit chemin électrique 10.

On comprendra que la deuxième portion 4C, 5C des premier et deuxième organes de raccordement électrique 4, 5 présente une orientation identique à celle d'une portion pliée d'un segment 1A, 1B d'une épingle 1 disposée dans la même couche du bobinage 400 que le conducteur 4, 5 correspondant.

Plus particulièrement, pour réaliser les extrémités terminales 10D1, 10D2 dudit chemin électrique 10, la première portion 4B du premier organe de raccordement électrique 4 forme la première extrémité terminale 10D1 dudit chemin électrique 10 de la machine électrique tournante 100 et la deuxième portion 4C du premier organe de raccordement électrique 4 est reliée à la deuxième extrémité 10A2 du premier chemin électrique 10A. De façon similaire, la première portion 5B du deuxième organe de raccordement électrique 5 forme la deuxième extrémité terminale 10D2 du chemin électrique 10 de la machine électrique tournante 100 et la deuxième portion 5C du deuxième organe de raccordement électrique 5 est reliée à la deuxième extrémité 10B2 du deuxième chemin électrique 10B.

Les extrémités terminales 10D1, 10D2 s'étendent axialement à distance du corps annulaire 210 pour faciliter le raccordement électrique dudit chemin électrique 10 de la machine électrique tournante 100 au réseau électrique du véhicule, via une carte électronique de commande et notamment un module de conversion de courant électrique (non représenté) assurant la conversion d'un courant continu en un courant alternatif ou inversement selon le mode de fonctionnement de la machine.

Pour assurer un même sens de circulation S1, S2, S3, S4 du courant électrique traversant les couches C1-C4 d'une même encoche 213, deux barrettes 6, 7 de liaison électrique sont agencées chacune entre deux encoches 213 communes audit chemin électrique 10, sur une même couche C2, C4.

Chaque barrette 6, 7 comporte deux portions conductrices 6A, 7A de forme linéaire reliées l'une à l'autre par une partie de raccordement 6B, 7B.

Chaque portion conductrice 6A, 7A d'une même barrette 6, 7 est délimitée par la partie de raccordement 6B, 7B émergeant du corps annulaire 210 depuis la première extrémité axiale 211 et par une portion de liaison électrique 6C, 7C émergeant du corps annulaire 210 depuis la deuxième extrémité axiale 212. On comprendra que les portions conductrices 6A, 7A, la partie de raccordement 6B, 7B et les portions de liaison électrique 6C, 7C d'une même barrette 6, 7 forment ensemble un élément continu conducteur de courant.

En pratique, et de façon similaire aux épingles conductrices 1, les portions conductrices 6A, 7A des barrettes 6, 7 sont insérées dans leurs encoches 213 respectives depuis la première extrémité axiale 211 du corps annulaire 210 du stator 200. La partie des portions conductrices 6A, 7A des barrettes 6, 7 émergeant du corps annulaire 210 du stator 200 depuis la deuxième extrémité axiale 212 est alors pliée pour former la portion de liaison électrique 2C, 3C.

On comprendra que les portions conductrices 6A, 7A des barrettes 6, 7 présentent une orientation identique à celle d'une portion pliée d'un segment 1A, 1B d'une épingle 1 disposée dans la même couche du bobinage 400 que les portions conductrices 6A, 7A correspondantes.

Les portions conductrices 6A, 7A d'une même barrette 6, 7 sont disposées dans des encoches 213 distinctes. De façon identique aux segments 1A, 1B d'une même épingle 1, les portions conductrices 6A, 7A d'une même barrette 6, 7 sont espacées d'un nombre d'encoches 213 égal à N-1, tel que défini précédemment. De plus, les portions conductrices 6A, 7A d'une même barrette 6, 7 occupent une même couche du bobinage 400 dans chacune de ces deux encoches 213.

Il convient de noter qu'une portion conductrice 6A, 7A d'au moins une barrette 6, 7 est agencée dans l'encoche 213 recevant le premier conducteur 2.

On notera également que la couche C2, C4 du bobinage 400 occupée par les deux portions conductrices 6A, 7A de chaque barrette 6, 7 est distincte des couches C1, C3 occupées par le premier et deuxième conducteurs 2, 3 et que les couches C2, C4 occupées par les portions conductrices 6A, 7A de chaque barrette 6, 7 sont distinctes et non consécutives l'une de l'autre. En l'occurrence, les portions conductrices 6A d'une première barrette 6 occupent la deuxième couche C2 et les portions conductrices 7A d'une deuxième barrette 7 occupent la quatrième couche C4.

Les portions conductrices 6A, 7A des barrettes 6, 7 sont positionnées pour combler les espaces vides laissés par les premier et deuxième conducteurs 2, 3 et par les premier et deuxième organes de raccordement électrique 4, 5. En effet, on comprendra que la portion linéaire 2A du premier conducteur 2 disposée dans la première couche C1 laisse vide un espace dans la deuxième couche C2 et la portion linéaire 3A du deuxième conducteur 3 disposée dans la troisième couche C3 laisse vide un espace dans la quatrième couche C4. De la même façon, la portion linéaire 4A du premier organe de raccordement électrique 4 disposée dans la première couche C1 laisse vide un espace dans la deuxième couche C2 et la portion linéaire 5A du deuxième organe de raccordement électrique 5 disposée dans la troisième couche C3 laisse vide un espace dans la quatrième couche C4. Ces espaces vides laissés dans la deuxième couche C2 et dans la quatrième couche C4 sont remplis par les portions conductrices 6A, 7A des barrettes 6, 7 afin d'assurer un sens de circulation S1, S2, S3, S4 du courant électrique dans les encoches 213 tel que défini.

Les portions conductrices 6A de la première barrette 6 occupant la deuxième couche C2 sont reliées électriquement à une extrémité 1D d'un premier segment 1A de la première série A d'épingles 1 disposé dans la première couche C1 et les portions conductrices 7A de la deuxième barrette 7 occupant la quatrième couche C4 sont reliées électriquement à une extrémité 1D d'un premier segment 1A de la deuxième série B d'épingles 1 disposé dans la troisième couche C3.

Ainsi, l'agencement des barrettes 6, 7 de liaison électrique permet avantageusement d'assurer que dans une même encoche 213, les segments 1A, 1B des épingles conductrices 1 et/ou les portions linéaires 2A, 3A des conducteurs 2, 3 et/ou les portions linéaires 4A, 5A des organes de raccordement électrique 4, 5 soient parcouru(e)s par un courant électrique orienté selon un même sens de circulation S1, S2, S3, S4.

Il convient de noter que des encoches 213 du corps annulaire 210 du stator 200 sont remplies uniquement par des premier et deuxième segments 1A, 1B de la première et deuxième séries A, B d'épingles 1, alors que certaines encoches 213 du corps annulaire 210 du stator 200 sont remplies par au moins une portion linéaire 2A, 3A d'un conducteur 2, 3 et/ou au moins une portion linéaire 4A, 5A d'un organe de raccordement électrique 4, 5, tel que défini.

On comprendra alors que ledit chemin électrique 10 est délimité par les premières portions 4B, 5B des premier et deuxième organes de raccordement électrique 4, 5. Ainsi, selon ce premier mode de réalisation, le premier organe de raccordement électrique 4 occupe, de façon commune avec le premier conducteur 2, la première couche C1 du bobinage 400 et le deuxième organe de raccordement électrique 5 occupe, de façon commune avec le deuxième conducteur 3, la troisième couche C3 du bobinage 400.

Tel qu'illustré à la figure 5, la partie de raccordement 6B, 7B de chaque barrette 6, 7 chevauche une pluralité d'épingles 1 de la série A, B d'épingles 1 qui lui est associée. Plus particulièrement, la partie de raccordement 6B, 7B de chaque barrette 6, 7 chevauche une pluralité de sections vrillées des jonctions coudées 1C de la série A, B d'épingles 1 qui lui est associée. De façon encore plus particulière, la portion courbée 2B du premier conducteur 2 chevauche la partie de raccordement 6B de la première barrette 6.

Une entrée de courant électrique dudit chemin électrique 10 est alors réalisée par la première couche C1 du bobinage 400 et une sortie de courant électrique de ce même chemin électrique 10 est réalisée sur la troisième couche C3 du bobinage 400 via les premier et deuxième organes de raccordement électrique 4, 5. On comprendra que ledit chemin électrique 10 est parcouru par un même courant électrique.

Il est avantageux que le chemin électrique 10 ainsi formé ait pour intérêt de permettre, dans une même encoche 213, un sens de circulation S1, S2, S3, S4 du courant électrique identique dans chacune des couches C1-C4 de l'encoche 213 correspondante. Ces sens de circulation S1, S2, S3, S4 communs permettent avantageusement de limiter les perturbations du champ magnétique.

On notera également que le chemin électrique 10 permet que le courant électrique parcourant les couches C1-C4 de deux encoches 213 du chemin électrique 10 successives l'une à l'autre soit orienté dans des sens différents.

D'autre part, il convient de noter que deux encoches 213 symétriquement opposées l'une à l'autre par rapport à l'axe sont deux encoches 213 dédiées à un même chemin électrique 10. Ces deux encoches 213 symétriquement opposées l'une à l'autre par rapport à l'axe O sont parcourues par le même courant électrique dudit chemin électrique 10. Ceci permet avantageusement d'entraîner le pôle magnétique en correspondance au rotor 300.

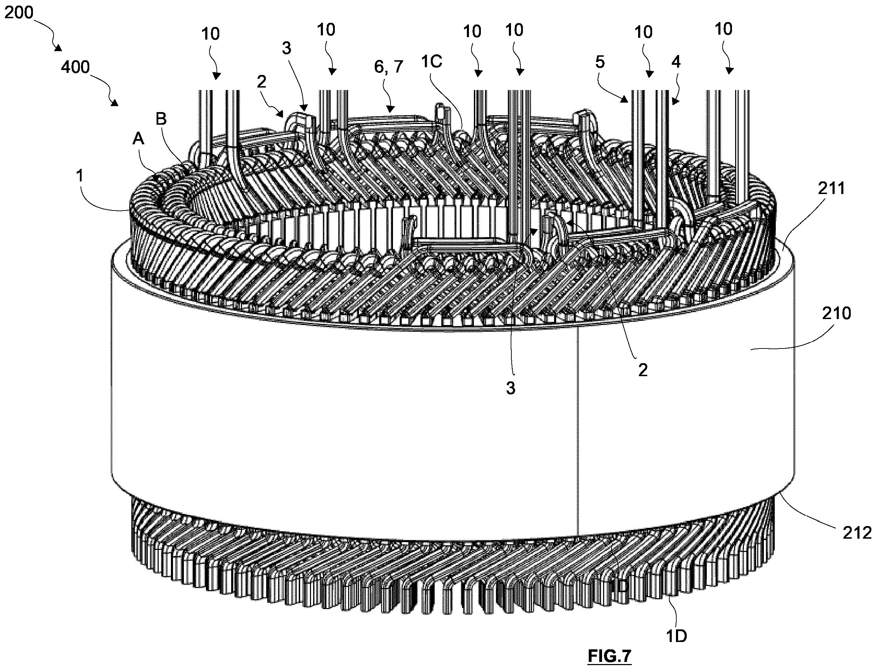

On va maintenant décrire un deuxième mode de réalisation en se référant aux figures 7, 8 et 11. Le bobinage 400 de ce deuxième mode de réalisation est similaire à celui du premier mode de réalisation et comprend autant de chemins électriques 10. Ce deuxième mode de réalisation diffère du premier mode de réalisation par des arrangements particuliers des conducteurs électriques 2, 3, des organes de raccordement électrique 4, 5 et des barrettes 6, 7 de liaison électrique précédemment décrites.

Dans la suite de la description de ce deuxième mode de réalisation et afin de simplifier la compréhension de l'invention, on ne décrira que l'un de ces chemins électriques 10.

Un tel chemin électrique 10 est formé de façon similaire à celui du premier mode de réalisation.

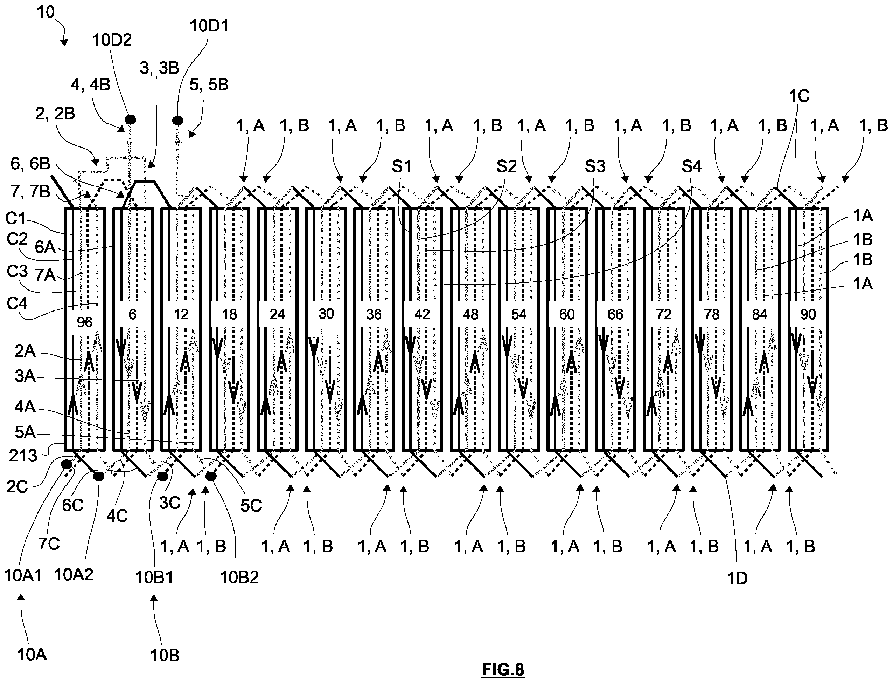

A la figure 8, on a représenté schématiquement un tel chemin électrique 10 selon ce deuxième mode de réalisation. Dans la suite de la description relative à ce deuxième mode de réalisation, on pourra à tout moment se référer à la figure 8 pour faciliter la compréhension de l'invention.

De façon similaire au premier mode de réalisation, le premier conducteur 2 et le deuxième conducteur 3 permettent de relier électriquement le premier chemin électrique 10A et le deuxième chemin électrique 10B l'un à l'autre.

Selon une spécificité de ce deuxième mode de réalisation, la portion linéaire 2A du premier conducteur 2 occupe dans son encoche 213 la deuxième couche C2 du bobinage 400 et la portion linéaire 3A du deuxième conducteur 3 occupe dans son encoche 213 la quatrième couche C4 du bobinage 400. De façon similaire au premier mode de réalisation, la portion linéaire 2A du premier conducteur 2 est séparée de la portion linéaire 3A du deuxième conducteur 3 par une couche, en l'occurrence la troisième couche C3.

Les premier et deuxième conducteurs 2, 3 sont reliés électriquement l'un à l'autre par leur portion courbée 2B, 3B, depuis la première extrémité axiale 211 du corps annulaire 210 du stator 200.

On comprendra alors que le premier conducteur 2 et le deuxième conducteur 3 permettent de relier électriquement la deuxième couche C2 du bobinage 400 et la quatrième couche C4 du bobinage 400 l'une à l'autre.

De façon similaire au premier mode de réalisation, le premier organe de raccordement électrique 4 et le deuxième organe de raccordement électrique 5 permettent de former les extrémités terminales 10D1, 10D2 dudit chemin électrique 10 selon ce deuxième mode de réalisation.

En se référant à ce deuxième mode de réalisation, la portion linéaire 4A du premier organe de raccordement électrique 4 occupe la deuxième couche C2 du bobinage 400 pour former une première extrémité terminale dudit 10D1 chemin électrique 10 et la portion linéaire 5A du deuxième organe de raccordement électrique 5 occupe la quatrième couche C4 du bobinage 400 pour former une deuxième extrémité terminale dudit 10D2 chemin électrique 10.

Selon ce deuxième mode de réalisation, les portions conductrices 6A de la première barrette 6 occupent la première couche C1 du bobinage 400 et les portions conductrices 7A de la deuxième barrette 7 occupent la troisième couche C3 du bobinage 400.

Les portions conductrices 6A de la première barrette 6 occupant la première couche C1 sont reliées électriquement à une extrémité 1D d'un premier segment 1A de la première série A d'épingles 1 et les portions conductrices 7A de la deuxième barrette 7 occupant la troisième couche C3 sont reliées électriquement à une extrémité 1D d'un premier segment 1A de la deuxième série B d'épingles 1.

On comprendra alors que, selon ce deuxième mode de réalisation, ledit chemin électrique 10 est délimité par les premières portions 4B, 5B des premier et deuxième organes de raccordement électrique 4, 5. Ainsi, selon ce deuxième mode de réalisation, le premier organe de raccordement électrique 4 occupe, de façon commune avec le premier conducteur 2, la deuxième couche C2 du bobinage 400 et le deuxième organe de raccordement électrique 5 occupe, de façon commune avec le deuxième conducteur 3, la quatrième couche C4 du bobinage 400.

Selon ce deuxième mode de réalisation, une entrée de courant électrique dudit chemin électrique 10 est alors réalisée par la deuxième couche C2 du bobinage 400 et une sortie de courant électrique de ce même chemin électrique 10 est réalisée sur la quatrième couche C4 du bobinage 400. On comprendra que ledit chemin électrique 10 est parcouru par un même courant électrique.

On comprendra que, dans ce deuxième mode de réalisation, les premier et deuxième conducteurs 2, 3 de l'élément de connexion électrique sont disposés davantage radialement à l'intérieur du stator par rapport à la configuration prévue dans le premier mode de réalisation

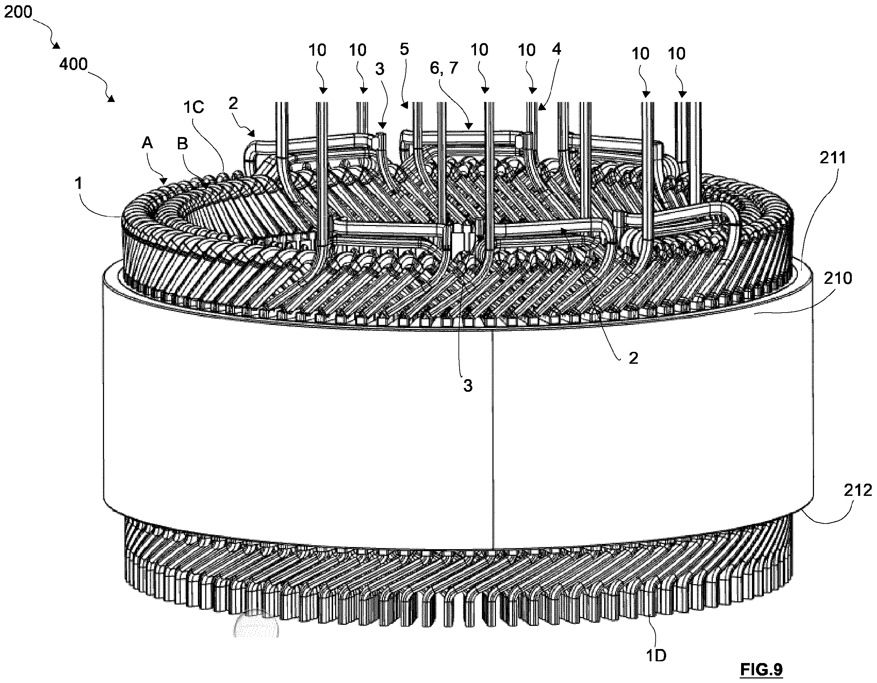

On va maintenant décrire un troisième mode de réalisation en se référant aux figures 9, 10 et 12. Le bobinage 400 de ce troisième mode de réalisation est similaire à celui du premier mode de réalisation et comprend autant de chemins électriques 10. Ce troisième mode de réalisation diffère du premier mode de réalisation par des arrangements particuliers des conducteurs électriques 2, 3, des organes de raccordement électrique 4, 5 et des barrettes 6, 7 de liaison électrique précédemment décrites.

Dans la suite de la description de ce troisième mode de réalisation et afin de simplifier la compréhension de l'invention, on ne décrira que l'un de ces chemins électriques 10. Un tel chemin électrique 10 est formé de façon similaire à celui du premier mode de réalisation.

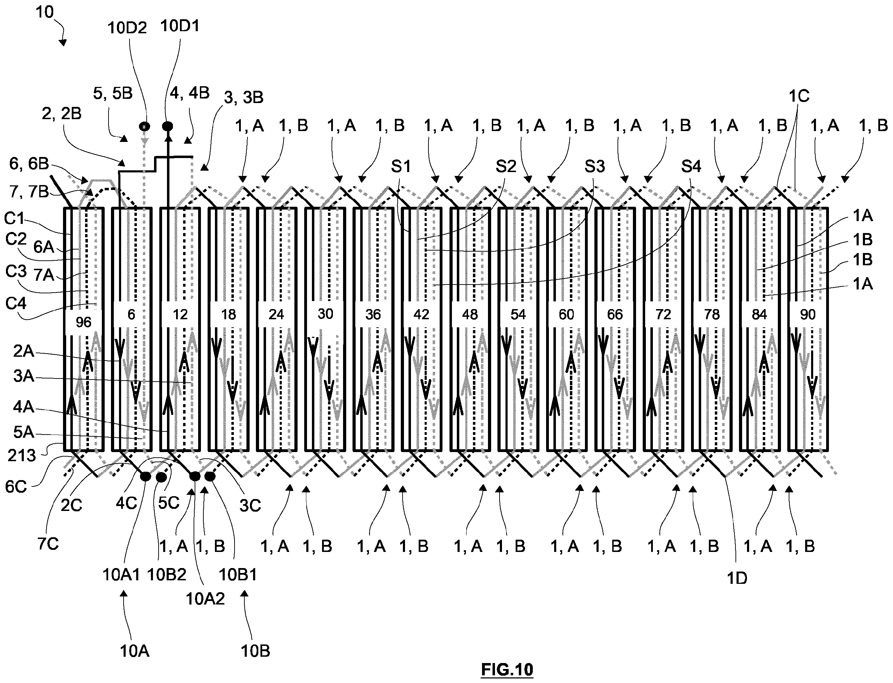

A la figure 10, on a représenté schématiquement un tel chemin électrique 10 selon ce troisième mode de réalisation. Dans la suite de la description relative à ce troisième mode de réalisation, on pourra à tout moment se référer à la figure 10 pour faciliter la compréhension de l'invention.

De façon similaire au premier mode de réalisation, le premier conducteur 2 et le deuxième conducteur 3 permettent de relier électriquement le premier chemin électrique 10A et le deuxième chemin électrique 10B l'un à l'autre.

Selon une spécificité de ce troisième mode de réalisation, la portion linéaire 2A du premier conducteur 2 occupe dans son encoche 213 la première couche C1 du bobinage 400 et la portion linéaire 3A du deuxième conducteur 3 occupe dans son encoche 213 la quatrième couche C4 du bobinage 400. De façon distincte aux premier et deuxième modes de réalisation, la portion linéaire 2A du premier conducteur 2 est séparée de la portion linéaire 3A du deuxième conducteur 3 par deux couches, en l'occurrence la troisième couche C3 et la deuxième couche C2.

Les premier et deuxième conducteurs 2, 3 d'un élément de connexion électrique sont reliés électriquement l'un à l'autre par leur portion courbée 2B, 3B, depuis la première extrémité axiale 211 du corps annulaire 210 du stator 200.

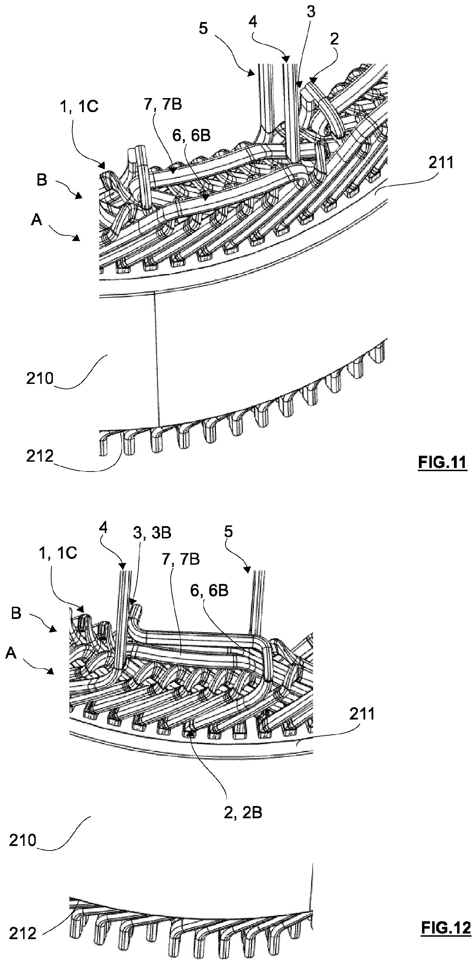

En se référant à la figure 12, pour relier électriquement le premier conducteur 2 et le deuxième conducteur 3 selon ce troisième mode de réalisation, la portion courbée 2B du premier conducteur 2 chevauche une épingle 1 de la première série A et une épingle 1 de la deuxième série B pour être reliée électriquement à la portion courbée 3B du deuxième conducteur 3.

On comprendra alors que le premier conducteur 2 et le deuxième conducteur 3 permettent de relier électriquement la première couche C1 du bobinage 400 et la quatrième couche C4 du bobinage 400 l'une à l'autre.

De façon similaire au premier mode de réalisation, le premier organe de raccordement électrique 4 et le deuxième organe de raccordement électrique 5 permettent de former les extrémités terminales 10D1, 10D2 dudit chemin électrique 10 selon ce troisième mode de réalisation.

En se référant à ce troisième mode de réalisation, la portion linéaire 4A du premier organe de raccordement électrique 4 occupe la première couche C1 du bobinage 400 pour former une première extrémité terminale 10D1 dudit chemin électrique 10 et la portion linéaire 5A du deuxième organe de raccordement électrique 5 occupe la quatrième couche C4 du bobinage 400 pour former une deuxième extrémité terminale 10D2 dudit chemin électrique 10.

Selon ce troisième mode de réalisation, les portions conductrices 6A de la première barrette 6 occupent la deuxième couche C2 du bobinage 400 et les portions conductrices 7A de la deuxième barrette 7 occupent la troisième couche C3 du bobinage 400.

Les portions conductrices 6A de la première barrette 6 occupant la deuxième couche C2 sont reliées électriquement à une extrémité 1D d'un premier segment 1A de la première série A d'épingles 1 et les portions conductrices 7A de la deuxième barrette 7 occupant la troisième couche C3 sont reliées électriquement à une extrémité 1D d'un premier segment 1A de la deuxième série B d'épingles 1.

Tel qu'illustré à la figure 12, la partie de raccordement 6B, 7B de chaque barrette 6, 7 chevauche au moins une épingle 1 de la série A, B d'épingles 1 qui lui est associée. Plus particulièrement, la partie de raccordement 6B, 7B de chaque barrette 6, 7 chevauche au moins une jonction coudée 1C d'une épingle 1 de la série A, B d'épingles 1 qui lui est associée. De façon encore plus particulière, la portion courbée 2B, 3B du premier conducteur 2 chevauche la partie de raccordement 6B de la première barrette 6 et la partie de raccordement 7B de la deuxième barrette 7.

On comprendra alors que, selon ce troisième mode de réalisation, ledit chemin électrique 10 est délimité par les premières portions 4B, 5B des premier et deuxième organes de raccordement électrique 4, 5. Ainsi, selon ce troisième mode de réalisation, le premier organe de raccordement électrique 4 occupe, de façon commune avec le premier conducteur 2, la première couche C1 du bobinage 400 et le deuxième organe de raccordement électrique 5 occupe, de façon commune avec le deuxième conducteur 3, la quatrième couche C4 du bobinage 400.

Selon ce troisième mode de réalisation, une entrée de courant électrique dudit chemin électrique 10 est alors réalisée par la quatrième couche C4 du bobinage 400 et une sortie de courant électrique de ce même chemin électrique 10 est réalisée sur la première couche C1 du bobinage 400. On comprendra que ledit chemin électrique 10 est parcouru par un même courant électrique.

On comprendra que, dans ce troisième mode de réalisation, le premier conducteur 2 est disposé radialement à l'extérieur du stator et le deuxième conducteur 3 est disposé radialement à l'intérieur du stator, avec un écartement maximal par rapport à la configuration prévue dans le premier mode de réalisation. Les premier et deuxième conducteurs 2, 3 sont alors disposés en périphérie de leur encoche 213 respective. On comprendra qu'il en est de même pour les premier et deuxième organes de raccordement électrique 4, 5.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique. La combinaison des caractéristiques, des variantes et des différentes formes de réalisation doit être couverte par la portée définie par les revendications annexées.

## Revendications

1. Stator (200) pour une machine électrique tournante (100) destinée à équiper un véhicule, le stator (200) comprenant un corps annulaire (210) autour d'un axe (O) et un bobinage (400), le corps annulaire (210) comportant une pluralité d'encoches (213) régulièrement réparties de façon circonférentielle autour du corps annulaire (210), et le bobinage (400) comprenant une première série (A) d'épingles conductrices (1) et une deuxième série (B) d'épingles conductrices (1) agencées dans les encoches (213) en plusieurs couches (C1-C4) superposées du bobinage (400) selon une direction radiale, à savoir au moins une première couche (C1), une deuxième couche (C2), une troisième couche (C3) et une quatrième couche (C4) successives les unes aux autres, de sorte que la première couche (C1) est radialement à l'extérieur et la quatrième couche (C4) est radialement à l'intérieur, chaque épingle conductrice (1) comprenant un premier segment (1A) et un deuxième segment (1B) connectés par une jonction coudée (1C) de sorte que les segments (1A, 1B) d'une même épingle conductrice (1) soient disposés dans des encoches (213) distinctes,
les premiers segments (1A) et les deuxièmes segments (1B) de la première série (A) d'épingles (1) sont agencés respectivement dans la première couche (C1) du bobinage (400) et dans la deuxième couche (C2) du bobinage (400) et les premiers segments (1A) et les deuxièmes segments (1B) de la deuxième série (B) d'épingles (1) sont agencés respectivement dans la troisième couche (C3) du bobinage (400) et dans la quatrième couche (C4) du bobinage (400),
la première série (A) d'épingles (1) formant un premier chemin électrique (10A) est reliée électriquement à la deuxième série (B) d'épingles (1) formant un deuxième chemin électrique (10B),
un
élément de connexion électrique (2, 3) comporte un premier conducteur (2) et un deuxième conducteur (3) qui sont en partie disposés dans des encoches (213) distinctes, le premier conducteur (2) occupant une des couches (C1, C2) communes à la première série (A) d'épingles (1) et le deuxième conducteur (3) occupant une des couches (C3, C4) communes à la deuxième série (B) d'épingles (1), le premier conducteur (2) et le deuxième conducteur (3) étant reliés électriquement l'un à l'autre, le premier conducteur (2) et le deuxième conducteur (3) occupant deux couches (C1-C4) distinctes du bobinage (400) et séparées l'une de l'autre d'au moins une couche, l'élément de connexion électrique (2, 3) étant agencé pour relier électriquement en série le premier chemin électrique (10A) et le deuxième chemin électrique (10B).

2. Stator (200) selon la revendication 1, **caractérisé en ce que** le premier conducteur (2) occupe la première couche (C1) du bobinage (400) et le deuxième conducteur (3) occupe la troisième couche (C3) du bobinage (400).

3. Stator (200) selon la revendication 1, **caractérisé en ce que** le premier conducteur (2) occupe la deuxième couche (C2) du bobinage (400) et le deuxième conducteur (3) occupe la quatrième couche (C4) du bobinage (400).

4. Stator (200) selon la revendication 1, **caractérisé en ce que** le premier conducteur (2) occupe la première couche (C1) du bobinage (400) et le deuxième conducteur (3) occupe la quatrième couche (C4) du bobinage (400).

5. Stator (200) selon l'une quelconque des revendications 1 à 4, **caractérisé en ce que** le premier conducteur (2) et le deuxième conducteur (3) comportent chacun une portion linéaire (2A, 3A) et une portion courbée (2B, 3B), les portions linéaires (2A, 3A) étant logées dans leur encoche (213) respective et les portions courbées (2B, 3B) étant reliées électriquement l'une à l'autre.

6. Stator (200) selon la revendication précédente, **caractérisé en ce que** la portion courbée (2B, 3B) d'au moins un des premier ou deuxième conducteur (2, 3) chevauche au moins une partie d'une épingle (1) d'une des séries (A, B) d'épingles (1).

7. Stator (200) selon l'une quelconque des revendications 1 à 6, **caractérisé en ce qu'**au moins une barrette (6, 7) de liaison électrique est agencée entre deux encoches (213), la barrette (6, 7) présentant deux portions conductrices (6A, 7A) occupant une même couche (C1-C4) du bobinage (400) dans chacune de ces deux encoches (213) et une partie de raccordement (6B, 7B) reliant ces deux portions conductrices (6A, 7A), et **en ce que** la couche (C1-C4) du bobinage (400) occupée par les deux portions conductrices (6A, 7A) est distincte des couches (C1-C4) occupées par le premier et deuxième conducteurs (2, 3).

8. Stator (200) selon la revendication précédente, **caractérisé en ce que** la partie de raccordement (6B, 7B) de la barrette (6, 7) chevauche au moins une épingle (1) d'une des séries (A, B) d'épingles (1).

9. Stator (200) selon la revendication 7 ou 8, **caractérisé en ce que** la portion courbée (2B, 3B) d'au moins un des premier ou deuxième conducteurs (2, 3) chevauche la partie de raccordement (6B, 7B) de la barrette (6, 7).

10. Stator (200) selon l'une quelconque des revendications précédentes, **caractérisé en ce qu'**au l'autre le premier conducteur (2) et le deuxième conducteur (3) sont directement connectés l'un à l'autre.

11. Machine électrique tournante pour véhicule automobile comprenant un stator (200) selon l'une des revendications précédentes.

## Patentansprüche

1. Stator (200) für eine drehende elektrische Maschine (100) zur Ausrüstung eines Fahrzeugs, wobei der Stator (200) einen ringförmigen Körper (210) um eine Achse (O) und eine Wicklung (400) umfasst, wobei der ringförmige Körper (210) eine Mehrzahl von Rillen (213) umfasst, die in Umfangsrichtung regelmäßig um den ringförmigen Körper (210) verteilt sind, und wobei die Wicklung (400) eine erste Reihe (A) leitender Nadeln (1) und eine zweite Reihe (B) leitender Nadeln (1) umfasst, die in den Rillen (213) in mehreren übereinander gelagerten Schichten (C1-C4) der Wicklung (400) in einer radialen Richtung angeordnet sind, und zwar wenigstens eine erste Schicht (C1), eine zweite Schicht (C2), eine dritte Schicht (C3) und eine vierte Schicht (C4), die aufeinander folgen, so dass sich die erste Schicht (C1) radial außen und die vierte Schicht (C4) radial innen befindet, wobei jede leitende Nadel (1) ein erstes Segment (1A) und ein zweites Segment (1B) umfasst, die durch eine gekrümmte Verbindung (1C) verbunden sind, so dass die Segmente (1A, 1B) von ein und derselben leitenden Nadel (1) in gesonderten Rillen (213) angeordnet sind, wobei die ersten Segmente (1A) und die zweiten Segmente (1B) der ersten Reihe (A) von Nadeln (1) in der ersten Schicht (C1) der Wicklung (400) bzw. in der zweiten Schicht (C2) der Wicklung (400) angeordnet sind und die ersten Segmente (1A) und die zweiten Segmente (1B) der zweiten Reihe (B) von Nadeln (1) in der dritten Schicht (C3) der Wicklung (400) bzw. in der vierten Schicht (C4) der Wicklung (400) angeordnet sind, wobei die erste Reihe (A) von Nadeln (1), die einen ersten elektrischen Pfad (10A) bildet, elektrisch mit der zweiten Reihe (B) von Nadeln (1) verbunden ist, die einen zweiten elektrischen Pfad (10B) bilden, ein elektrisches Verbindungselement (2, 3) einen ersten Leiter (2) und einen zweiten Leiter (3) aufweist, die teilweise in gesonderten Rillen (213) angeordnet sind, wobei der erste Leiter (2) eine der Schichten (C1, C2) einnimmt, die der ersten Reihe (A) von Nadeln (1) gemeinsam sind, und der zweite Leiter (3) eine der Schichten (C3, C4) einnimmt, die der zweiten Reihe (B) von Nadeln (1) gemeinsam sind, wobei der erste Leiter (2) und der zweite Leiter (3) elektrisch miteinander verbunden sind, wobei der erste Leiter (2) und der zweite Leiter (3) zwei gesonderte und durch wenigstens eine Schicht voneinander getrennte Schichten (C1-C4) der Wicklung (400) einnehmen, wobei das elektrische Verbindungselement (2, 3) dafür angeordnet ist, den ersten elektrischen Pfad (10A) und den zweiten elektrischen Pfad (10B) elektrisch in Reihe zu schalten.

2. Stator (200) nach Anspruch 1, **dadurch gekennzeichnet, dass** der erste Leiter (2) die erste Schicht (C1) der Wicklung (400) einnimmt und der zweite Leiter (3) die dritte Schicht (C3) der Wicklung (400) einnimmt.

3. Stator (200) nach Anspruch 1, **dadurch gekennzeichnet, dass** der erste Leiter (2) die zweite Schicht (C2) der Wicklung (400) einnimmt und der zweite Leiter (3) die vierte Schicht (C4) der Wicklung (400) einnimmt.

4. Stator (200) nach Anspruch 1, **dadurch gekennzeichnet, dass** der erste Leiter (2) die erste Schicht (C1) der Wicklung (400) einnimmt und der zweite Leiter (3) die vierte Schicht (C4) der Wicklung (400) einnimmt.

5. Stator (200) nach einem der Ansprüche 1 bis 4, **dadurch gekennzeichnet, dass** der erste Leiter (2) und der zweite Leiter (3) jeweils ein lineares Teilstück (2A, 3A) und ein gekrümmtes Teilstück (2A, 3A) aufweisen, wobei die linearen Teilstücke (2A, 3A) in ihrer jeweiligen Rille (213) aufgenommen sind und die gekrümmten Teilstücke (2B, 3B) elektrisch miteinander verbunden sind.

6. Stator (200) nach dem vorhergehenden Anspruch, **dadurch gekennzeichnet, dass** das gekrümmte Teilstück (2B, 3B) von wenigstens einem des ersten oder zweiten Leiters (2, 3) wenigstens einen Abschnitt einer Nadel (1) einer der Reihen (A, B) von Nadeln (1) überlappt.

7. Stator (200) nach einem der Ansprüche 1 bis 6, **dadurch gekennzeichnet, dass** wenigstens eine elektrische Verbindungsschiene (6, 7) zwischen zwei Rillen (213) angeordnet ist, wobei die Schiene (6, 7) zwei leitende Teilstücke (6A, 7A), die ein und dieselbe Schicht (C1-C4) der Wicklung (400) in jeder der zwei Rillen (213) einnehmen, und einen Anschlussabschnitt (6B, 7B) aufweist, der diese zwei leitenden Teilstücke (6A, 7A) verbindet, und dadurch, dass die Schicht (C1-C4) der Wicklung (400), die von den zwei leitenden Teilstücken (6A, 7A) eingenommen wird, von den Schichten (C1-C4) gesondert ist, die vom ersten und zweiten Leiter (2, 3) eingenommen werden.

8. Stator (200) nach dem vorhergehenden Anspruch, **dadurch gekennzeichnet, dass** der Anschlussabschnitt (6B, 7B) der Schiene (6, 7) wenigstens eine Nadel (1) einer der Reihen (A, B) von Nadeln (1) überlappt.

9. Stator (200) nach Anspruch 7 oder 8, **dadurch gekennzeichnet, dass** das gekrümmte Teilstück (2B, 3B) von wenigstens einem des ersten oder zweiten Leiters (2, 3) den Anschlussabschnitt (6B, 7B) der Schiene (6, 7) überlappt.

10. Stator (200) nach einem der vorhergehenden Ansprüche, **dadurch gekennzeichnet, dass** zum der andere der erste (2) und der zweite Leiter (3) direkt miteinander verbunden sind.

11. Drehende elektrische Maschine für ein Kraftfahrzeug umfassend einen Stator (200) nach einem der vorhergehenden Ansprüche.

## Claims

1. Stator (200) for a rotary electric machine (100) intended to be fitted in a motor vehicle, the stator (200) comprising an annular body (210) about an axis (O) and a winding (400), the annular body (210) having a plurality of slots (213) regularly distributed circumferentially around the annular body (210), and the winding (400) comprising a first series (A) of conductive pins (1) and a second series (B) of conductive pins (1) arranged in the slots (213) in a plurality of superposed layers (C1-C4) of the winding (400) in a radial direction, namely at least a first layer (C1), a second layer (C2), a third layer (C3) and a fourth layer (C4) that succeed one another, such that the first layer (C1) is radially on the outside and the fourth layer (C4) is radially on the inside, each conductive pin (1) comprising a first segment (1A) and a second segment (1B) that are connected by an elbow joint (1C) such that the segments (1A, 1B) of one and the same conductive pin (1) are disposed in separate slots (213),
the first segments (1A) and the second segments (1B) of the first series (A) of pins (1) are arranged respectively in the first layer (C1) of the winding (400) and in the second layer (C2) of the winding (400) and the first segments (1A) and the second segments (1B) of the second series (B) of pins (1) are arranged respectively in the third layer (C3) of the winding (400) and in the fourth layer (C4) of the winding (400),
the first series (A) of pins (1) forming a first electrical path (10A) is electrically connected to the second series (B) of pins (1) forming a second electrical path (10B),
an electrical connection element (2, 3) has a first conductor (2) and a second conductor (3) that are in part disposed in separate slots (213), the first conductor (2) occupying one of the layers (C1, C2) common to the first series (A) of pins (1) and the second conductor (3) occupying one of the layers (C3, C4) common to the second series (B) of pins (1), the first conductor (2) and the second conductor (3) being electrically connected to one another, the first conductor (2) and the second conductor (3) occupying two separate layers (C1-C4) of the winding (400) that are separated from one another by at least one layer, the electrical connection element (2, 3) being arranged to electrically connect the first electrical path (10A) and the second electrical path (10B) in series.

2. Stator (200) according to Claim 1, **characterized in that** the first conductor (2) occupies the first layer (C1) of the winding (400) and the second conductor (3) occupies the third layer (C3) of the winding (400).

3. Stator (200) according to Claim 1, **characterized in that** the first conductor (2) occupies the second layer (C2) of the winding (400) and the second conductor (3) occupies the fourth layer (C4) of the winding (400).

4. Stator (200) according to Claim 1, **characterized in that** the first conductor (2) occupies the first layer (C1) of the winding (400) and the second conductor (3) occupies the fourth layer (C4) of the winding (400).

5. Stator (200) according to any one of Claims 1 to 4, **characterized in that** the first conductor (2) and the second conductor (3) each have a linear portion (2A, 3A) and a curved portion (2B, 3B), the linear portions (2A, 3A) being housed in their respective slots (213) and the curved portions (2B, 3B) being electrically connected to one another.

6. Stator (200) according to the preceding claim, **characterized in that** the curved portion (2B, 3B) of at least one of the first and second conductors (2, 3) overlaps at least a part of a pin (1) of one of the series (A, B) of pins (1).

7. Stator (200) according to any one of Claims 1 to 6, **characterized in that** at least one electrical link bar (6, 7) is arranged between two slots (213), the bar (6, 7) having two conductive portions (6A, 7A) occupying one and the same layer (C1-C4) of the winding (400) in each of these two slots (213) and a connecting part (6B, 7B) connecting these two conductive portions (6A, 7A), and **in that** the layer (C1-C4) of the winding (400) that is occupied by the two conductive portions (6A, 7A) is separate from the layers (C1-C4) occupied by the first and second conductors (2, 3).

8. Stator (200) according to the preceding claim, **characterized in that** the connecting part (6B, 7B) of the bar (6, 7) overlaps at least one pin (1) of one of the series (A, B) of pins (1).

9. Stator (200) according to Claim 7 or 8, **characterized in that** the curved portion (2B, 3B) of at least one of the first and second conductors (2, 3) overlaps the connecting part (6B, 7B) of the bar (6, 7).

10. Stator (200) according to any one of the preceding claims, **characterized in that** at the the other the first conductor (2) and the second conductor (3) are directly connected to one another.

11. Rotary electric machine for a motor vehicle, comprising a stator (200) according to one of the preceding claims.
